Europäisches Patentamt

European Patent Office

Office européen des brevets

(11) Veröffentlichungsnummer: **0 250 621**
**B1**

# (12) EUROPÄISCHE PATENTSCHRIFT

(45) Veröffentlichungstag der Patentschrift:
14.06.89

(51) Int. Cl.⁴: **H04B 7/26**

(21) Anmeldenummer: 86108704.7

(22) Anmeldetag: 26.06.86

(54) Verfahren zur Übertragung von Informationen zwischen einer Datenfunkzentrale und einer Vielzahl von mobilen Datenfunkstationen auf einer einzigen Trägerfrequenz.

(43) Veröffentlichungstag der Anmeldung:
07.01.88 Patentblatt 88/1

(45) Bekanntmachung des Hinweises auf die Patenterteilung:
14.06.89 Patentblatt 89/24

(84) Benannte Vertragsstaaten:
BE DE FR

(73) Patentinhaber: Theimeg Elektronikgeräte GmbH & Co. KG, Clörather Strasse 3, D-4060 Viersen 1(DE)

(72) Erfinder: Plum, Bernhard, Gladbacher Strasse 627, D-4060 Viersen 1(DE)

(74) Vertreter: Puschmann, Heinz H. et al, Spott und Puschmann Patentanwälte Sendlinger-Tor-Platz 11, D-8000 München 2(DE)

(56) Entgegenhaltungen:
EP-A- 0 069 275
DE-A- 2 351 013
DE-A- 2 362 765
DE-A- 2 812 009
DE-C- 3 304 451

NACHRICHTENTECHNISCHE ZEITSCHRIFT, Band 28, Nr. 210, 1975, Seiten 338-343, Berlin, DE; G. GROTH: "Blockfehlerwahrscheinlichkeit bei digitaler Pulsdauermodulation (DPDM)"
CONFERENCE RECORD OF TWENTY-EIGHTH IEEE VEHICULAR TECHNOLOGY CONFERENCE, Denver, Colorado, 22.-24. März 1978, Seiten 9-22; A. BORELLI et al.: "An integrated approach to automatic vehicle monitoring and mobile digital communication"
E.D.N. ELECTRICAL DESIGN NEWS, Band 27, Nr. 2, 20. Januar 1982, Seite 158, Boston, US; R. TENNY: "RS-232 cable suits multifunction use"

**Beschreibung**

Die Erfindung betrifft ein Verfahren zur Übertragung von Informationen zwischen einer Datenfunkzentrale und einer Vielzahl von mobilen Datenfunkstationen auf einer einzigen Trägerfrequenz, wobei Datenfunkzentrale und mobile Datenfunkstationen Sende- und Empfangseinrichtungen aufweisen.

Solche Verfahren werden insbesondere zum Fernsteuern von Lokomotiven, Entladeeinrichtungen und ähnlichen sich bewegenden Objekten verwendet; vgl. z.B. DE-B 27 56 613.

Zur Überwachung der Fahrrouten von Omnibussen ist es bekannt (DE-A 2 812 009), eine Kommunikation zwischen einer festen Hauptstation und mehreren beweglichen Stationen in der Weise herzustellen, daß innerhalb eines sich wiederholenden festen Zeitrahmens mit einer Anzahl von gleichlangen Zeitschlitzen in bestimmten dieser Zeitschlitze Synchronisierimpulse von der Hauptstation und in bestimmten den einzelnen beweglichen Stationen festzugeordneten anderen Zeitschlitzen Datentelegramme von den beweglichen Stationen ausgesendet werden und im festen Zeitrahmen ferner Zeitschlitze für Datentelegramme der Hauptstation an die beweglichen Stationen und Zeitschlitze für das Belegen durch die beweglichen Stationen vorzusehen, um Notrufe und andere dringende Meldungen und etwa erforderlich werdende Antwortmeldungen absetzen zu können, wobei solche Meldungen bis zur Quittierung durch die angesprochene Hauptstation stochastisch wiederholt werden können und wobei die freien Zeitschlitze nur dann belegt werden können, wenn eine Freiprüfung ergeben hat, daß sie nicht von anderen beweglichen Stationen belegt worden sind.

Zwar ist es hierdurch möglich, einen gegenseitigen Nachrichtenaustausch zwischen Haupt- und beweglichen Stationen durchzuführen und dabei auch zusätzliche Meldungen, Anfragen oder Notrufe sowie die erforderlich werdenden Antwortmeldungen zu übertragen. Da jedoch ein Zeitrahmen bestimmter Länge vorgegeben ist, ist auch die Anzahl der beweglichen Stationen festgelegt und kann nicht beliebig erweitert werden. Nichtbenutzte Zeitschlitze bleiben ungenützt, was die Übertragungszeit nachteilig beeinflußt, da ungenützte Zeitschlitze verlorene Übertragungskapazität bedeuten. Zeitschlitze vorgegebener Länge erfordern aber auch Datentelegramme vorgegebener Länge bzw. Datenmenge, so daß Datentelegramme davon abweichender Länge die Zeitschlitze entweder nicht völlig ausfüllen oder ihre Datenmenge nicht übertragen werden kann. Außerdem können die beweglichen Stationen nur in den zugeordneten Zeitschlitzen und nur in Sonderfällen in freien Zeitschlitzen senden, die wiederum nur an bestimmten Stellen des festen Zeitrahmens vorgesehen sind, so daß oft nicht alle Informationen innerhalb eines Sendezyklus ausgetauscht werden können.

Est ist auch bekannt, von einer Leitstelle aus über Sprechfunk die Fahrrouten einer Vielzahl von Fahrzeugen, wie z.B. Taxi oder Lastkraftwagen zu koordinieren, um so deren Einsatz zu optimieren.

Allen diesen Anwendungen liegt die allgemeine Erkenntnis zugrunde, daß die Wirtschaftlichkeit eines Produktions- oder Transportbetriebes oder eines Handelsunternehmens im wesentlichen durch einen rationellen Materialfluß bestimmt wird, wobei erst bei einer hohen Transparenz im Informationsfluß innerhalb der Abläufe zwischen Lager und Betrieb die Transportleistungen ohne den Umweg über die Verarbeitung kostenintensiver Belege optimiert werden können.

Voraussetzung hierfür ist, das Informationen schnell bekannt werden, um es zu ermöglichen, rechtzeitig über Maßnahmen zu entscheiden, welche Transportabläufe in welcher Reihenfolge und Form vorrangig durchgeführt werden müssen. Informationen über bereits erfolgte Transportvorgänge haben hierbei nur noch statistischen Wert.

Die funktechnische Übermittlung solcher Informationen erfolgte bisher über die genannten Sprechfunksysteme. Solche Sprechfunksysteme arbeiten jedoch nicht störungsfrei und auch nicht schnell genug, um in einem Rechner zur Auswertung zur Verfügung zu stehen. Durch die vielen Sprechfunksysteme, die in einem Großbetrieb gleichzeitig in verschiedenen Frequenzbereichen betrieben werden, wie Personenrufanlagen, mobile Handsprechfunkgeräte für Feuerwehr, Werkschutz und ähnliches, wird eine schnelle störungsfreie Übertragung solcher Informationen unmöglich gemacht. Darüber hinaus müssen über Sprechfunk übertragene Informationen von Hand in den Computer eingegeben werden, was ebenfalls zeitaufwendig ist. Funksprechgeräte mit digitalisierter Sprachübertragung sind bisher auf dem Markt nicht erhältlich.

Beide vorerwähnten Verfahren sind daher für eine zeitoptimierte Übertragung einer Vielzahl von Informationen mit stark unterschiedlicher Datenmenge zwischen einer Zentrale und mobilen Datenfunkstationen und vis versa wenig geeignet.

Der Erfindung liegt daher die Aufgabe zugrunde, ein neues Verfahren und eine Schaltungsanordnung zur Durchführung des Verfahrens zu schaffen das besser als die bisherigen Verfahren für eine schnelle wechselseitige Übertragung von Informationen auf einer einzigen Trägerfrequenz zwischen einer Zentrale und mobilen Datenfunkstationen geeignet ist unter Berücksichtigung unterschiedlicher Datenmengen innerhalb eines vorgegebenen Telemetrierahmens.

Diese Aufgabe ist gemäß der Erfindung für das Verfahren durch die kennzeichnenden Merkmale des Patentanspruchs 1, für die Anordnung zur Durchführung des Verfahrens durch die kennzeichnenden Merkmale des Patentanspruchs 6 gelöst.

Weitere Merkmale der Erfindung ergeben sich aus den Unteransprüchen.

Die Informationsübertragung zwischen der Zentrale und den mobilen Datenfunkstationen erfolgt also innerhalb eines eine Vielzahl von Rasterplätzen umfassenden Telemetrierahmens mit einem in Abhängigkeit der Anzahl der Rasterplätze zu wählenden Zeitraster, der durch die Zentrale durch Senden von Synchronisationssignalen für alle Datenfunkstationen synchronisiert wird. Alle zu übertragenden Informationen werden in kodierten seriellen Telegrammen gesendet, die jeweils mit einem Start-Zeichen beginnen und mit einem Stopp-Zeichen enden, so daß der jeweilige Empfänger eine eindeutige Telegrammerkennung vornehmen kann. Die zur Telegrammübertragung zur Verfügung stehenden Rasterplätze werden von den Datenfunkterminals stochastisch verteilt mit Informationstelegrammen belegt, eine Telegrammübertragung auf einem oder mehreren stochastisch belegten Rasterplatz oder -plätzen erfolgt nur dann, wenn dieser Rasterplatz oder -plätze durch fehlenden Empfang von Informationen dritter Datenfunkstationen von der sendebereiten Datenfunkstation als unbelegt erkannt wird. Ist ein stochastisch gewählter Rasterplatz belegt, so werden ein oder n- andere freie Rasterplätze stochastisch belegt. Der Zentrale ist innerhalb des Telemetrierahmens mindestens ein Rasterplatz zugeordnet, der zum Senden von Informationen von der Zentrale zu den Datenfunkstationen nutzbar ist oder aber von der Zentrale einer bestimmten Datenfunkstation für eine Informationsübertragung zur Zentrale zugeordnet werden kann. Jede Informationsübertragung zwischen Datenfunkstationen und Zentrale wird von der Zentrale durch eine Funksignal bestätigt, für das jeweils ein Quittungsplatz an Ende jedes Rasterplatzes vorgesehen ist.

Die Übertragung der Daten erfolgt mit einer durchschnittlichen Sendegeschwindigkeit von minimal 1200 Bit/sec, die je nach verwendeten HF-Bauteilen bis auf 7200 Bit/sec erhöht werden kann. Zur Erhöhung der Übertragungssicherheit ist jedem Telegramm nach der eigentlichen Nutzinformation eine Zusatzinformation von mindestens 8 Bit angehängt, die sicherstellt, daß zwei beliebige Telegramme sich in mindestens 4 Bit unterscheiden, mit anderen Worten, für die Telegrammsicherung ist eine Hamming-Distanz von mindestens D = 4 vorgesehen. Zur weiteren Erhöhung der Übertragungssicherheit sind jeder mobilen Datenfunkstation ein oder mehrere Rasterplätze innerhalb des Telemetrierahmens zugeordnet, so daß eine stochastische Belegung eines oder mehrerer Rasterplätze durch eine Datenfunkstation durch ein- oder mehrmaliges elektronisches Würfeln erfolgen kann, wobei von den gewürfelten Rasterplätzen der oder die jeweils freien Rasterplätze für die Informationsübertragung zwischen Datenfunkstationen und Zentrale benutzt wird. Durch das elektronische Würfeln wird sichergestellt, daß jeder mobilen Datenfunkstation ein freies Zeitraster zugeordnet werden kann, innerhalb dessen die einzelnen Meldungen der mobilen Datenfunkstation in der Zentrale sicher empfangen werden können. Sollten wider Erwarten ein oder mehrmals Überschneidungen von zu belegenden und belegten Rasterplätzen auftreten, so können trotzdem keine Meldungen verloren gehen, da innerhalb des Telemetrierahmens Sendezeiten für das Quittieren einer empfangenden Information vorgesehen sind, so daß die jeweilige Datenfunkstation die vollständige Informationsübertragung erkennt. Durch den Empfang anderer gerade sendender Datenfunkstationen "hört" also die sendebereite Datenfunkstation, ob der ihr durch das "Würfeln" zugeordnete Rasterplatz des Telemetrierahmens frei ist oder nicht.

Innerhalb des Zeitrasters werden alle Nutzdaten, wie z.B. Auftrags-Paletten- und ähnliche Kenn-Nummern, Stör- und Funktionsmeldungen, sowie Anforderung für eine längere Sendezeit zur Übertragung längerer Telegramme an die Zentrale übertragen. Wie bereits erwähnt, wird jede Sendung durch ein Quittungssignal seitens der Zentrale bestätigt. Die Wahl der Rasterplätze ist ferner so getroffen, daß nach Ablauf der Zeit für die Meldungen der Datenfunkstationen der Zentrale eine eigene Sendezeit zur Verfügung steht. Die im Telemetrierahmen für die Zentrale vorgesehene Sendezeit befindet sich vorzugsweise in den Pausen zwischen zwei Informationstelegrammen. Dies hat den Vorteil, daß die Zentrale immer den aktuellen Stand der in Funkkontakt stehenden erreichbaren mobilen Datenfunkstationen erfragen kann. Ein weiterer Vorteil ist darin zu sehen, daß durch die stochastische Belegung der Rasterplätze durch eine Datenfunkstation in aller Regel mindestens eine Nachricht von der Datenfunkstation zur Zentrale innerhalb eines Sendezyklus gesendet werden kann. Bei fester Zuordnung eines Rasterplatzes für je eine Datenfunkstation besteht die Gefahr, daß eine Nachricht von einer Datenfunkstation zur Zentrale erst nach mehreren Zyklen möglich ist, da je nach Lage und Ausbreitungsbedingungen sowie Sendetoleranzen mehrere Datenfunkstationen während des Betriebs sich überlagern können. Durch die stochastische Belegung erfolgt also eine zeitliche Entzerrung. Schließlich kann durch die Quittungssignale der Zentrale der einzige Hochfrequenzkanal, der zur Informationsübertragung zur Verfügung steht und für beide Senderichtungen benutzt werden muß, exakt zeitlich aufgeteilt werden. Die Zentrale erkennt an der Kennummer (Adresse), mit welcher der Datenfunkstationen Funkkontakt bestanden hat.

Die Vorteile des erfindungsgemäßen Verfahrens sind ferner darin zu sehen, daß insbesondere bei seinem Einsatz in der Lagerverwaltung infolge der zeitoptimierten Übertragung aller vorhandenen Informationen zwischen Zentrale und mobilen Datenfunkstationen ohne den Umweg über geschriebene Belege die Lagerbestände wesentlich gesenkt, ein schnellerer Lagerumschlag erreicht und damit die Kapitalbindung durch das Lager wesentlich verringert wird. Dies gilt auch für die eingesetzten Betriebsmittel, wie Fahrzeuge und Personal. Auch können Leistungsspitzen einfacher als bisher bewältigt werden, ohne daß es zu Fehlleitungen kommt.

Die Erfindung ist nachfolgend anhand eines in der Zeichnung dargestellten Ausführungsbeispieles beschrieben. Es zeigen:

Figur 1 schematisch ein PPM-kodiertes Telegramm für den Informationsinhalt 100 10111001,

Figur 2 ein Diagramm des Zeitrasters der Rasterplätze eines Telemetrierahmens für eine Zentrale und n mobile Datenfunkstationen,

Figur 3 die zeitliche Anordnung des Telemetrierahmens,

Figur 4 ein Blockschaltbild der steuernden Funkzentrale und

Figur 5 ein Blockschaltbild einer mobilen Datenfunkstation.

Als Anwendungsbeispiel für das nachfolgend beschriebene Verfahren zur Datenübertragung zwischen einer Zentrale ZFS und mobilen Datenfunkstationen MDF1 bis MDFn ist ein Material-Transportsystem gewählt, ohne jedoch die Erfindung hierauf zu beschränken.

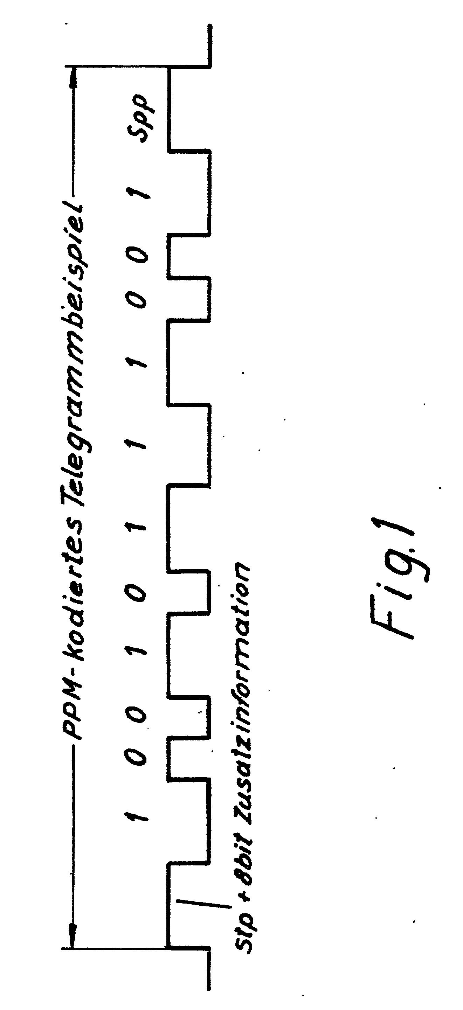

Alle Informationen, die zwischen der Zentrale und den Datenfunkstationen und vice versa auszutauschen sind, werden auf einer einzigen Trägerfrequenz drahtlos seriell übertragen. Hierzu werden die Informationen in Impulspausen modulierten (PPM-kodiert) seriellen, je ein Start- und ein Stopp-Zeichen Stp und Spp aufweisende Telegramme überführt, wie dies Figur 1 beispielsweise für die Information 10010111001 mit einr 8-Bit-Zusatzinformation zeigt.

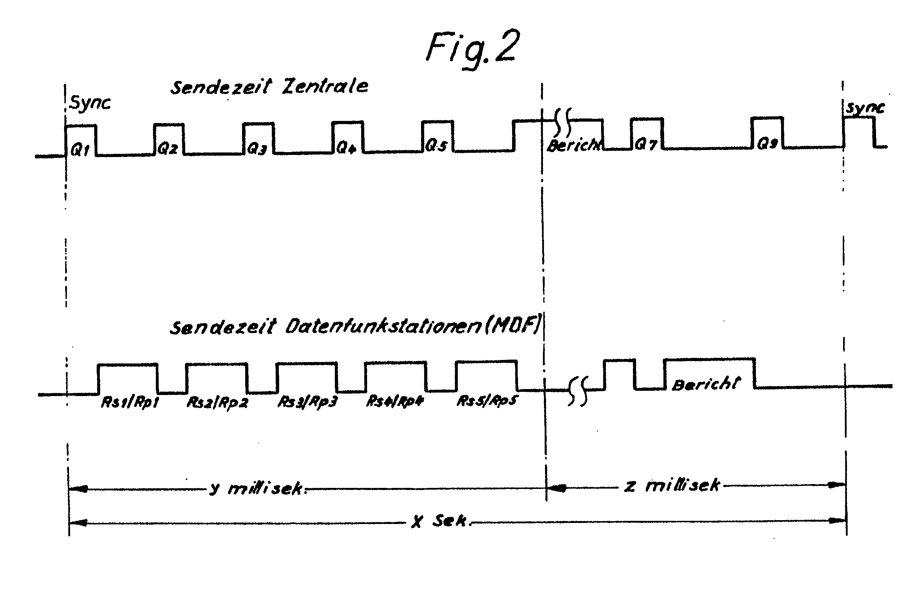

Die zu sendenden Telegramme sind einem in Figur 2 dargestellten Telemetrierahmen zugeordnet, der in den jeweiligen Gegebenheiten entsprechende Rasterplätze unterteilt ist, hier in fünf Rasterplätze RP1 bis RP5 entsprechend fünf Sendezeiten RS1 bis RS5 für die Datenfunkstationen MDF.

Jedem Rasterplatz ist eine Quittungssignalzeit Q1 bis Q5 nachge ordnet, innerhalb der der richtige Empfang eines Informationstelegramms durch die Zentrale bestätigt wird. Diese Quittierung erfolgt immer dann, wenn im Telemetrierahmen keine Sendezeit für die mobilen Datenfunkstationen vorgegeben sind. Innerhalb dieser Zeit kann aber auch die Zentrale ein Synchronisationszeichen oder eine Sendeaufforderung absenden, um so den einzigen für die Übertragung vorhandenen Hochfrequenzkanal optimal auszunutzen.

Schließlich folgt ein Rasterplatz Q 7 als normale Sendezeit für die Zentrale, die diese Sendezeit bei Bedarf einer Datenfunkstation zuordnen kann. Am Ende des Telemetrierrahmens folgt nochmals ein Rasterplatz Q 9 für das von der Zentrale aus zu sendende notwendige Quittungssignal.

Der Gesamtzyklus des Telemetrie-Rahmens umfaßt hier x Sekunden und ist unterteilt in y Millisekunden für die Rasterplätze RP1 bis RP5 und z Millisekunden für zusätzliche von der Zentrale zu verteilende Rasterplätze, also zusätzliche Sendezeit.

Durch diese Einteilung des Telemetrierahmens ist es möglich, die in der Praxis auftretenden unterschiedlichen Sendezeiten für die zu übertragenden unterschiedlichen Datenmengen der einzelnen mobilen Datenfunkstationen zur Zentrale und vice versa in jeweils gleiche Zeitfenster aufweisenden Zeitraster befehlen zu übertragen. Auch können während dieser Sendezeiten Störmeldungen bevorzugt übertragen werden.

Wie aus Figur 2 ferner ersichtlich ist, sendet die Zentrale zu Beginn eines jeden Telemetrierahmens ein Synchronisationssignal SYNC, das hier alle x Sekunden erscheint. Dem Synchronisationssignal folgen die fünf Rasterplätze RP1 bzw. RS1 bis RP5 bzw. RS5 für Sendungen der mobilen Datenfunkstationen, deren Sendezeiten in Zeile 2 der Figur 2 dargestellt sind.

In jeder Datenfunkstation ist eine elektronische Würfelschaltung 16 vorhanden, durch die mindestens einer von mehreren zur Verfügung stehenden Rasterplätzen stochastisch bestimmt wird. Der erste freie bzw. die ersten freien gewürfelten Rasterplätze werden von der Datenfunkstation für die Sendung ihrer Dateninformation zur Zentrale benutzt. Da jede Datenfunkstation über ihre eigene Empfangsanlage den Funkverkehr der anderen zum Telemetrierahmen gehörenden Datenfunkstationen hören kann, ist es einfach festzustellen, ob der ihr durch das Würfeln zugewiesene Rasterplatz gerade frei ist. In jedem Rasterplatz steht Sendezeit für das Quittieren des empfangenen Telegramms durch die Zentrale zur Verfügung, siehe Q 1 bis Q 5 in Zeile 1 der Figur 2.

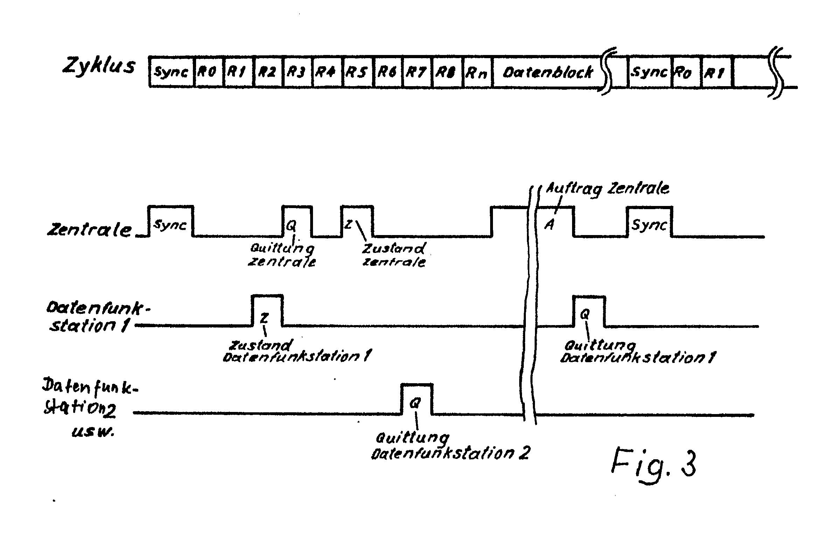

In Figur 3 ist die zeitliche Anordnung eines Synchronisationstelegramms für RO bis Rn Rasterplätze für die mobilen Datenfunkstationen dargestellt. Die Zentrale sendet am Anfang jedes Telemetrierahmens ein Synchronisationssignal SYNC an alle mobilen Datenfunkstationen, die sich dann mit "bereit" oder "nicht bereit" oder mit ihrer anstehenden Nutzinformation gemäß den Rasterplätzen RO bis Rn nacheinander in der vorstehend beschriebenen Weise melden. Die Zentrale sendet ihre Meldungen in den Zeitbereichen "A" zwischen zwei Synchronisationssignalen SYNC, vgl. Zeile 2 der Figur 3, (z.B.: Fahre von O nach P).

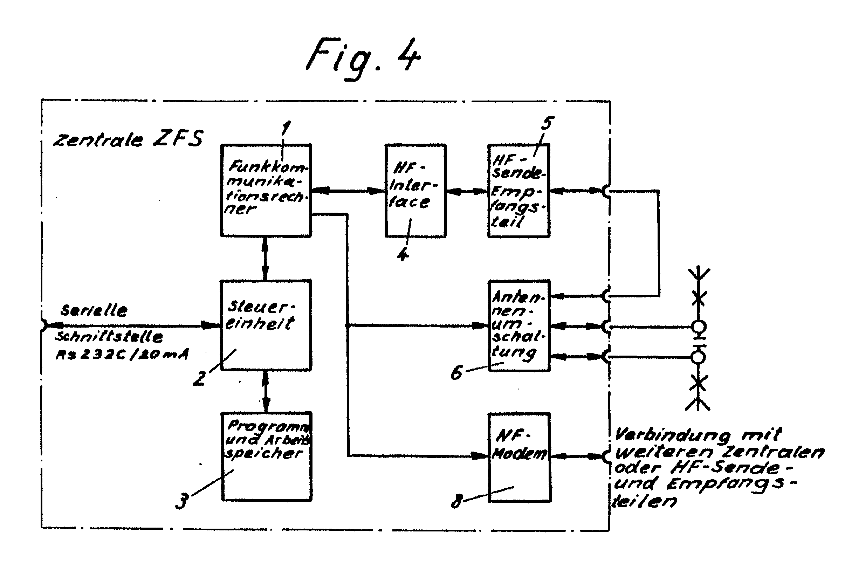

In Figur 4 ist ein Blockschaltbild der Zentrale ZFS schematisch dargestellt. Sie umfaßt einen Funkkommunikationsrechner 1 und einen Programm- und Arbeitsspeicher 3, denen eine Steuereinheit 2 übergeordnet ist. Über eine serielle Schnittstelle (RS 232C oder 20mA Stromschleife) ist die Zentrale mit weiteren übergeordneten Rechnern zu verbinden. Zum Funkkommunikationsrechner 1 mit seinem Mikroprozessor mit Programm und Arbeitsspeicher 3 gehört eine Sende-/Empfangslogik für einen Halbduplex-Betrieb der Hochfreuenz. Der Funkkommunikationsrechner ist ferner über ein HF-Interface 4 mit einem HF-Sende-/Empfangsteil 5 verbunden. Schließlich sind noch eine Antennenumschaltung 6 und ein NF-Modem 8 vorgesehen. Durch die beschriebene Ausbildung der Zentrale wird ermöglicht, daß bei einem Anschluß von bis n mobilen Datenfunkstationen an die Zentrale mit einer geringen Senderausgangsleistung von maximal 1 W gearbeitet werden kann. Um bei dieser geringen Ausgangsleistung bessere Reichweiten erzielen zu können, ist ein Mehrantennenbetrieb vorgesehen, der über den Rechner durch die genannte Antennenumschaltung 6 angesteuert wird. An die Antennenumschaltung können mehrere Antennen über ein Kabel oder weitere HF-Sende-Empfangsteile angeschlossen werden zwecks besserer Ausleuchtung des Fahrbereiches in einem Werkgelände oder innerhalb eines Lagerbetriebes. Das genannte NF-Modem ermöglicht den Anschluß von mehreren abgesetzten Unterzentralen, an die wiederum eine oder mehrere Antennen mit über ein HF-Sende-Empfangsteil und über vorgesehene Hochlaufsteuerungen sowie eine Steuerung zur Anpassung der Impedanz und der Signalanpassung angeschlossen werden können, so daß auch auf diese Weise größere Reichweiten erzielbar sind.

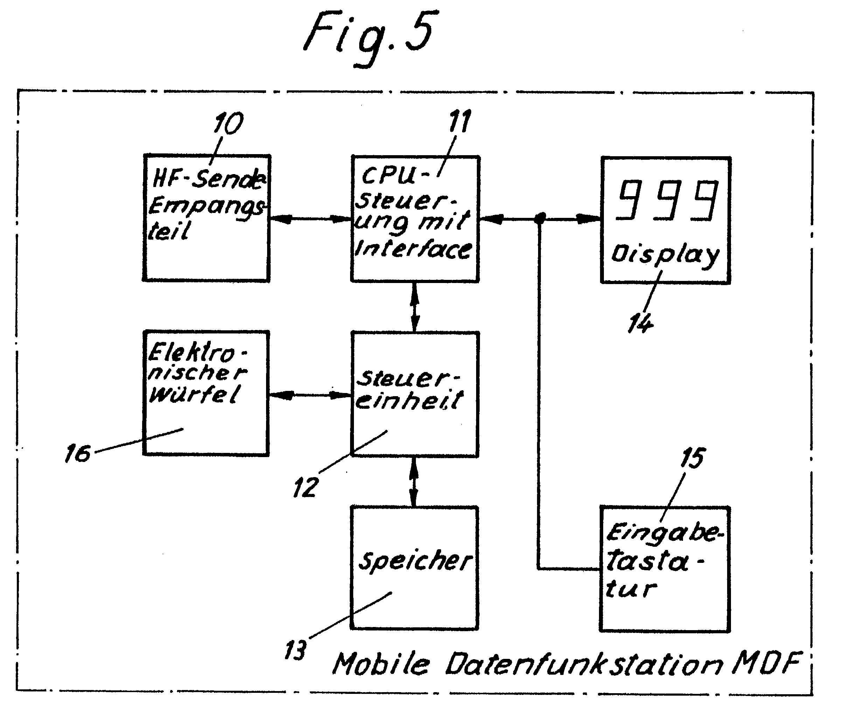

Jede mobile Datenfunkstation (MDF) weist eine in Figur 5 schematisch als Blockschaltbild dargestellte Schaltungsanordnung auf. Diese Schaltungsanordnung umfaßt einen HF-Sende/Empfangsteil 10, eine CPU-Steuerung mit Interface 11 (central processing unit) und eine Steuereinheit 12, die mit einem Speicher 13 verbunden ist. Ferner ist eine Anzeigevorrichtung (Display) 14 sowie eine Eingabetastatur 15 vorgesehen. Für die stochastische Belegung eines freien Rasterplatzes im Telemetrierahmen ist der Steuereinheit ein sogenannter elektronischer Würfel 16 zugeordnet, durch den in an sich bekannter Weise aus den jeweils zur Verfügung stehenden Rasterplätzen des Telemetrierahmens ein oder mehrere Rasterplätze aufgerufen werden, von denen durch die Steuereinheit die jeweils ersten freien Rasterplätze für das Senden eines vorliegenden Informationstelegramms besetzt werden. Da jede Datenfunkstation ein HF-Empfangsteil aufweist, kann sie durch Empfang gerade sendender Datenfunkstationen feststellen, ob der oder die durch das Würfeln ermittelten Rasterplätze tatsächlich frei sind oder ob auf ihnen gerade gesendet wird.

## Patentansprüche

1. Verfahren zur Übertragung von Informationen zwischen einer einen Rechner (1) aufweisenden Datenfunkzentrale (ZFS) und einer Vielzahl von mobilen Datenfunkstationen (MDF) auf einer einzigen Trägerfrequenz, wobei Datenfunkzentrale und mobile Datenfunkstationen Sende- und Empfangseinrichtungen (5, 10) aufweisen und die Informationsübertragung über einen in Zeitabschnitte unterteilten Telemetrierahmen erfolgt, gekennzeichnet durch folgende Merkmale:
– alle Informationen werden in seriellen PPM-kodierten Telegrammen (Fig. 1) gesendet,
– der Telemetrierahmen weist einen der Anzahl der Rasterplätze (R0–RN) entsprechenden Zeitraster auf, der durch die Datenfunkzentrale (ZFS) durch Senden eines Synchronisationssignals (SYNC) nach gleichen Zeitabschnitten synchronisiert wird,
– jedes Telegramm (Fig. 1) beginnt mit einem Start- und endet mit einem Stoppzeichen (Stp, Spp), zwischen denen Kenn- und Nutzinformationen sowie eine Anzahl von den Nutzinformationen nachgeordneten der Sicherung der Übertragung dienenden Zusatzinformationszeichen vorgesehen sind,
– die zur Telegrammübertragung zur Verfügung stehenden Rasterplätze (Rp1–Rpn) werden von den Datenfunkstationen (MDF) stochastisch verteilt mit Informationstelegrammen belegt,
– eine Telegrammübertragung auf einem oder mehreren stochastisch belegten Rasterplatz oder -plätzen (Rp1 bis Rpn) erfolgt nur dann, wenn dieser Rasterplatz oder -plätze durch fehlenden Empfang von Informationen dritter Datenfunkstationen (MdF) von der sendebereiten Datenfunkstation (MDF) als unbelegt erkannt wird,

– ist ein stochastisch gewählter Rasterplatz (Rp1–Rpn) belegt, so werden ein oder n andere freie Rasterplätze stochastisch belegt,
– der Datenfunkzentrale (ZFS) ist innerhalb des Telemetrierahmens mindestens ein Rasterplatz (Q) zugeordnet, der zum Senden von Informationen von der Datenfunkzentrale zu den Datenfunkstationen (MDF) nutzbar ist oder aber von der Datenfunkzentrale einer bestimmten Datenfunkstation für eine Informationsübertragung zur Datenfunkzentrale zugeordnet werden kann und
– jede Informationsübertragung zwischen Datenfunkstation (MDF) und Datenfunkzentrale (ZFS) wird durch ein Funksignal bestätigt, für das jeweils ein Quittungsplatz (Q1–Qn) am Ende jedes Rasterplatzes (Rp1–Rpn) vorgesehen ist.

2. Verfahren nach Anspruch 1, dadurch gekennzeichnet, daß die stochastische Belegung eines Rasterplatzes (Rp1–Rpn) durch eine Datenfunkstation (MDF) durch ein- oder n-maliges elektronisches Würfeln erfolgt, wobei von den gewürfelten Rasterplätzen der oder die jeweils freien Rasterplätze für die Informationsübertragung zwischen Datenfunkstation (MDF) und Datenfunkzentrale (ZFS) benutzt werden.

3. Verfahren nach Anspruch 2, dadurch gekennzeichnet, daß zwecks Übertragung größerer Informationsmengen zwei oder mehrere gewürfelte Rasterplätze (Rp1–Rpn) des Telemetrierahmens von einer Datenfunkstation (MDF) belegt werden.

4. Verfahren nach den Ansprüchen 1 bis 3, dadurch gekennzeichnet, daß der Datenfunkzentrale (ZFS) n-Rasterplätze (Q1–Qn) des Telemetrierahmens für eine von der Datenfunkzentrale kommandierte Informationsübertragung zugeordnet sind.

5. Verfahren nach Anspruch 1, dadurch gekennzeichnet, daß die Informationsübertragung mit einer einstellbaren Geschwindigkeit von mindestens 1.200 Bits/sec. erfolgt.

6. Anordnung zur Durchführung des Verfahrens nach den Ansprüchen 1 bis 5, dadurch gekennzeichnet, daß der in der Datenfunkzentrale (ZFS) vorgesehene Rechner ein Funkkommunikationsrechner (1) zur Organisation der Informationsübertragungen zwischen Zentrale und Datenfunkstationen ist, dem über eine Steuereinheit (2) ein Programm- und Arbeitsspeicher (3) und über ein HF-Interface (4) ein HF-Sende- und Empfangsteil (5) sowie gegebenenfalls ein Antennenumschalter (6) und ein NF-Modem (8) zugeschaltet sind, und daß jeder mobilen Datenfunkstation (MdF) eine eine HF-Sende- und Empfangseinrichtung (10), eine CPU-Steuerung (11) und eine Steuereinheit (12) umfassende Schaltungsanordnung, ein Speicher (13), eine Anzeigevorrichtung (14), eine Tastatur (15) sowie eine der Steuereinheit zugeordnete elektronische Würfelschaltung (16) zugeordnet ist.

7. Anordnung nach Anspruch 6, dadurch gekennzeichnet, daß über eine serielle Schnittstelle (RS/232C/Stromschleife 20 mA) der Funkkommunikationsrechner (1) mit weiteren Rechnern zu verbinden ist.

8. Anordnung nach den Ansprüchen 6 und 7, dadurch gekennzeichnet, daß der Zentrale (ZFS) über das NF-Modem (8) Unterzentralen (ZFSn) mit weiteren HF-Sende-Empfangsteilen zuzuordnen sind.

## Claims

1. A method of transmitting data between a central data radio station (ZFS) comprising a computer (1), and a plurality of mobile data radio stations (MDF) on a single carrier frequency, the central station and the mobile stations having send-receive facilities (5, 10) and the data transmission being by way of a telemetering frame which is subdivided into periods of time, characterised by the following features:
   – all the data is transmitted in serial PPM-coded telegrams (Fig. 1),
   – the telemetering frame comprises a time raster which corresponds to the number of raster points (R0–RN) and which is synchronized by the central data radio station (ZFS) by transmitting a synchronization signal (SYNC) after identical periods of time,
   – each telegram (Fig. 1) starts with a start sign (Stp) and ends with a stop sign (Spp) between which there are provided identification and utilization data and a number of additional data signs subsidiary to the utilization data and serving to ensure transmission,
   – the raster points (Rp1–Rpn) available for telegram transmission are busied with data telegrams stochastically distributed by the data radio stations (MDF),
   – a telegram transmission at one or more stochastically busied raster point or points (Rp1 to Rpn) occurs only when the mobile station (MDF) ready to transmit identifies such point or points as free due to non-receipt of data from third mobile stations (MDF),
   – when a stochastically selected raster point (Rp1–Rpn) has been busied, one or n other free raster points is/are stochastically busied,
   – the central data radio station (ZFS) is associated in the telemetering frame with at least one raster point (Q) which can be used for data transmission from the central station to the mobile stations (MFD) or which the central station can associate with a particular mobile station for data transmission to the central station and
   – any data transmission between the mobile station (MFD) and the central station (ZFS) is acknowledged by a radio signal for which there is an acknowledgement of receipt slot (Q1–Qn) at the end of each raster point (Rp1–Rpn).

2. A method according to claim 1, characterised in that stochastic busying of a raster point (Rp1–Rpn) by a mobile station (MDF) is effected by single of n-times electronic dicing, and whichever of the diced raster points is free is or are used for data transmission between the mobile station (MDF) and the central station (ZFS).

3. A method according to claim 2, characterised in that to increase traffic capacity two or more diced raster points (Rp1–Rpn) of the telemetering frame are busied by a mobile station (MDF).

4. A method according to claims 1 to 3, characterised in that n raster points (Q1–Qn) of the telemetering frame are associated with the central station (ZFS) for data transmission ordered thereby.

5. A method according to claim 1, characterised in that data transmission proceeds with an adjustable speed of at least 1200 bits per second.

6. An arrangement for the practice of the method according to claims 1 to 5, characterised in that a radio communication computer (1) for organizing data transmissions between the central station and the mobile stations is provided in the central station (ZFS) and has connected to it, by way of a control unit (2), a program and work memory (3) and, by way of an HF interface (4), an HF send-receive facility (5) and, possibly, an antenna changeover switch (6) and an LF modem (8), and a circuit arrangement comprising an HF send-receive facility (10), a CPU control (11) and a control unit (12), together with a memory (13), a display device (14), a keyboard (15), and an electronic dicing arrangement (16) associated with the control unit (12), is associated with each mobile station (MDF).

7. An arrangement according to claim 6, characterised in that the radio communication computer (1) can be connected to other computers by way of a serial interface (RS/232C/20 mA current loop).

8. An arrangement according to claims 6 and 7, characterised in that lower-rank central stations (ZFSn) with other HF send-receive facilities can be associated with the central station (ZFS) by way of the LF modem (8).

## Revendications

1. Procédé de transmission d'informations entre une station centrale de transmission radio de données (ZFS), comportant un ordinateur (1), et un grand nombre de stations radio mobiles de transmission radio de données (MDF), sur une fréquence porteuse unique, la station radio centrale et les stations mobiles de transmission de données comportant des installations émettrices et réceptrices (5, 10) et la transmission d'information s'effectuant au traver d'un cadre télémetrique divisé en intervalles de temps, caractérisé par les parties caractérisantes suivantes:
   – Toutes les informations sont émises sous forme de télégrammes séquentiels, codés PPM (figure 1),
   – Le cadre télémétrique comporte une grille de temps conforme au nombre des positions de trame (R0 – Rn), grille de temps qui est synchronisée, suivant des intervalles de temps égaux, par la station centrale d'émission radio de données (ZFS), au moyen de l'émission d'un signal de synchronisation (SYNC),
   – Chaque télégramme commence par un signal de début (Stp) et se termine par un signal de fin (Spp), entre lesquels sont prévues des informations de reconnaissance et des informations utilitiaires, ainsi qu'un certain nombre de signaux d'information complémentaires servant à la sécurité de transmission et ajoutés aux informations utilitaires,

EP 0 250 621 B1

— Les positions de trame disponibles pour la transmission de télégrammes (Rpl–Rpn) sont réparties stochastiquement et occupées par les terminaux de transmission radio de données avec des télégrammes d'informations.

— une transmission de télégramme peut seulement avoir lieu sur une ou plusieurs positions de trame occupées stochastiquement si cette ou ces positions de trame sont reconnues comme non occupées par la stations de transmission radio prête à émettre, au moyen de la non-réception d'informations de tierces stations de transmission radio.

— Si une position de trame choisie stochastiquement est occupée, alors une ou n autres positions de trame vont être occupées stochastiquement.

— A l'intérieur du cadre télémétrique, au moins une position de trame est attribuée à la station centrale, position qui peut être utilisée par la station centrale pour émettre des informations vers les stations de transmission radio, ou qui peut aussi être attribuée par la station centrale à une station de transmission radio déterminée pour une transmission d'information à la station centrale.

— Chaque transmission d'information entre des stations de transmission radio et la station centrale est confirmée par la station centrale au moyen d'un signal radio pour lequel, chaque fois, une position d'accusé de réception est prévue à la fin de chaque position de trame.

2. Procédé suivant la revendication 1, caractérisé en ce que l'occupation stochastique d'une position de trame (Rp1 – Rpn) se réalise, par une station de transmission radio (MDF), au moyen d'un unique tirage au sort* ou de tirages au sort électroniques répétés n fois, la position de trame ou chacune des positions de trame libres étant utilisées, par les positions de trame tirées au sort, pour la transmission d'informations entre la station de transmission radio (MDF) et la station centrale de transmission radio (ZFS).

3. Procédé suivant la revendication 2, caractérisé en ce que, dans le but de transmettre une plus grande quantité d'informations, deux ou plusieurs positions de trame (Rpl – Rpn) tirées au sort du cadre télémétrique sont occupées par une station de transmission radio (MDF).

4. Procédé suivant les revendications 1 à 3, caractérisé en ce qu'à la station centrale de transmission radio (ZFS), sont affectées n positions de trame (Q1 – Qn) du cadre télémétrique pour la transmission d'informations sur instruction de la station centrale.

5. Procédé suivant la revendication 1, caractérisé en ce que la transmission d'informations s'effectue à une vitesse réglable d'au moins 1200 bits/s.

6. Disposition pour l'application du procédé suivant les revendications 1 à 5, caractérisée en ce que l'ordinateur prévu dans la station centrale de transmission radio est un ordinateur de communication radio (1) pour l'organisation des transmissions d'informations entre la station centrale et les stations de transmission radio, ordinateur auquel sont connectés, par l'intermédiaire d'une unité de commande (2), une mémoire de programme et de travail (3) et, par l'intermédiaire d'un interface HF (4), un élément émetteur-récepteur HF (5) ainsi que, le cas échéant, un commutateur d'antennes (6) et un modem basse fréquence (8), et en ce qu'à chaque station mobile de transmission radio (MDF), un ensemble de circuits comprenant un élément émetteur-récepteur HF (10), une unité de commande CPU (11) et une unité de commande (12), une mémoire (13), une unité d'affichage (14), un clavier (15) ainsi qu'un circuit électronique à tirage au sort (16) connecté à l'unité de commande.

7. Dispositif suivant la revendication 6, caractérisée en ce que l'ordinateur de communication radio (1) est connecté, par l'intermédiaire d'un interface série (RS 232C / boucle de courant 20 mA), avec d'autres ordinateurs.

8. Disposition suivant les revendications 6 et 7, caractérisée en ce qu'à la station centrale (ZFS) sont adjointes, par l'intermédiaire du modem basse fréquence (8), des sous-stations centrales (ZFSn) ou d'autres unités émettrices-réceptrices HF.

7

PPM-kodiertes Telegrammbeispiel

1 0 0 1 0 1 1 1 0 0 1 Spp

Stp + 8bit Zusatzinformation

Fig.1

EP 0 250 621 B1

# Fig.2

Sync

Sendezeit Zentrale

$Q_1$ $Q_2$ $Q_3$ $Q_4$ $Q_5$ Bericht $Q_7$ $Q_9$ Sync

Sendezeit Datenfunkstationen (MDF)

$Rs_1/Rp_1$ $Rs_2/Rp_2$ $Rs_3/Rp_3$ $Rs_4/Rp_4$ $Rs_5/Rp_5$ Bericht

y millisek. z millisek

X Sek.

EP 0 250 621 B1

Zyklus | Sync | R0 | R1 | R2 | R3 | R4 | R5 | R6 | R7 | R8 | Rn | Datenblock | Sync | R0 | R1

Auftrag Zentrale

Zentrale — Sync — Q — Z — A — Sync

Quittung Zentrale

Zustand Zentrale

Datenfunk-station 1 — Z — Q

Zustand Datenfunkstation 1

Quittung Datenfunkstation 1

Datenfunk-Station2 — Q

u.s.w.

Quittung Datenfunkstation 2

Fig. 3

EP 0 250 621 B1

# Fig. 4

zentrale ZFS

Funkkommunika-
tions-rechner    1

HF-
Interface    4

HF-
Sende-
Empfangsteil    5

Serielle

Schnittstelle
Rs232C/20mA

Steuereinheit    2

Antennenumschaltung    6

Programm
und Arbeits
speicher    3

NF-
Modem    8

Verbindung mit
weiteren Zentralen
oder HF-Sende-
und Empfangsteilen

EP 0 250 621 B1

# Fig.5

EP 0 250 621 B1